# EUROPÄISCHE PATENTANMELDUNG

(11) **EP 4 044 302 A1**
(43) Veröffentlichungstag der Anmeldung: **17.08.2022**
(21) Anmeldenummer: 22152891.2
(22) Anmeldetag: 24.01.2022
(51) Int. Cl.: H01M 8/04089, H01M 8/04111

(54) **PNEUMATISCHES VERSORGUNGSSYSTEM**

(30) Priorität: 16.02.2021 DE 102021201475
(71) Anmelder: KNORR-BREMSE Systeme für Nutzfahrzeuge GmbH, 80809 München (DE)
(72) Erfinder: GRIESSER, Fabian, 80803 München (DE); COMPERA, Yves, 85748 Garching bei München (DE)

(57) **Zusammenfassung**

Es wird ein Versorgungssystem für ein Fahrzeug mit einem Pneumatiksystem (PS) und einer Brennstoffzelle (FC) offenbart, wobei das Versorgungssystem folgendes aufweist:
- eine Schnittstelle, die dazu ausgebildet ist, mit einer Antriebseinheit verbunden zu werden;
- eine Leistungsübertragungseinrichtung; und
- mindestens zwei Verdichter (VD1, VD2), wobei
das Versorgungssystem dazu ausgebildet ist, über die Leistungsübertragungseinrichtung Leistung von der Schnittstelle an die mindestens zwei Verdichter (VD1, VD2) zu übertragen, wobei das Versorgungssystem dazu ausgebildet ist, Druckluft an die Brennstoffzelle (FC) und das Pneumatiksystem (PS) zu übertragen.

Ferner wird ein Fahrzeug mit einem solchen Versorgungssystem offenbart.

## Beschreibung

Die vorliegende Erfindung betrifft eine pneumatisches Versorgungssystem sowie ein Fahrzeug mit einem solchen Versorgungssystem.

Die Bestrebung hin zu einer emissionsfreien Mobilität führt neben der Elektrifizierung des Antriebsstrangs mittels Traktionsbatterie auch zu einer Elektrifizierung mittels Brennstoffzelle. Bei einer Brennstoffzelle werden die Elemente Sauerstoff und Wasserstoff mittels chemischer Reaktion zu Wasser verbunden, wobei elektrischer Strom entsteht, der insbesondere für den Fahrzeugantrieb oder auch für weitere Verbraucher des Fahrzeugs verwendet werden kann. Während der benötigte Wasserstoff üblicherweise aus einem Tank entnommen wird, den das Fahrzeug mitführt, wird der Sauerstoff zumindest teilweise aus der Umgebungsluft an die Brennstoffzelle zugeführt. Dies erfolgt üblicherweise durch einen Verdichter, der Umgebungsluft ansaugt und auf ein erstes Druckluftniveau verdichtet. Diese Druckluft wird dann direkt oder über einen zwischengeschalteten Druckluftspeicher der Brennstoffzelle zugeführt.

Ferner befinden sich weitere pneumatisch betriebene Systeme, nachfolgend als Pneumatiksysteme bezeichnet, an Bord eines solchen Fahrzeugs. Ein solches Pneumatiksystem kann insbesondere ein Bremssystem, ein Luftfedersystem, einen Verdichter und/oder einen Druckluftbehälter aufweisen.

Daher ist es Aufgabe der vorliegenden Erfindung eine Möglichkeit aufzuzeigen, dieses Problem zu lösen.

Diese Aufgabe wird durch die Gegenstände der unabhängigen Ansprüche gelöst. Vorteilhafte Weiterbildungen sind Gegenstand der Unteransprüche.

Erfindungsgemäß ist ein Versorgungssystem für ein Fahrzeug vorgesehen. Das Fahrzeug weist ein Pneumatiksystem und eine Brennstoffzelle auf.

Das Versorgungssystem umfasst:
- eine Schnittstelle, die dazu ausgebildet ist, mit einer Antriebseinheit verbunden zu werden;
- eine Leistungsübertragungseinrichtung; und
- mindestens zwei Verdichter.

Das Versorgungssystem ist dazu ausgebildet, über die Leistungsübertragungseinrichtung Leistung von der Schnittstelle an die mindestens zwei Verdichter zu übertragen, wobei das Versorgungssystem dazu ausgebildet ist, Druckluft an die Brennstoffzelle und das Pneumatiksystem zu übertragen.

Dabei können Pneumatiksystem bzw. Brennstoffzelle auch über einen Verbund von Fahrzeugen verteilt vorgesehen sein. Dies ist beispielsweise der Fall, wenn das Fahrzeug eine Zugmaschine und einen Anhänger umfasst, die miteinander gekoppelt sind, und das Versorgungssystem, die Brennstoffzelle und das Pneumatiksystem nicht alle auf demselben Fahrzeug vorgesehen sind. So kann beispielsweise das Pneumatiksystem auf dem Anhänger vorgesehen sein, das über Leitungen durch das Versorgungssystem, das auf der Zugmaschine vorgesehen ist, versorgt wird.

Die Schnittstelle kann mechanisch ausgeprägt sein, so dass Leistung mechanisch, beispielsweise über eine Welle und/oder ein Getriebe, an die Leistungsübertragungseinrichtung übertragen werden kann.

Vorzugsweise ist einer der mindestens zwei Verdichter dazu ausgebildet, Druckluft, insbesondere ausschließlich, für das Pneumatiksystem des Fahrzeugs zur Verfügung zu stellen. So kann dieser Verdichter vorteilhafterweise für die Versorgung des Pneumatiksystems optimiert werden.

Vorzugsweise umfasst die Leistungsübertragungseinrichtung eine Welle, auf der mindestens einer der mindestens zwei Verdichter und/oder die Antriebseinheit angeordnet sind. Die Welle kann hier insbesondere als die o.g. Schnittstelle fungieren, um Leistung an das Versorgungssystem zu übertragen. Alternativ oder zusätzlich umfasst die Leistungsübertragungseinrichtung ein Getriebe, um die Leistung von der Schnittstelle an mindestens einen der mindestens zwei Verdichter zu übertragen.

Vorzugsweise ist eine Antriebseinheit, insbesondere eine E-Maschine und/oder eine Antriebsmaschine des Fahrzeugs, mit der Schnittstelle verbunden.

Bevorzugt weist das Versorgungssystem eine Antriebseinheit, insbesondere eine E-Maschine, auf, die mit der Schnittstelle verbunden ist.

Vorzugsweise ist einer der mindestens zwei Verdichter dazu ausgebildet, Druckluft, insbesondere ausschließlich, für die Brennstoffzelle des Fahrzeugs zur Verfügung zu stellen. So kann dieser Verdichter vorteilhafterweise für die Versorgung der Brennstoffzelle optimiert werden.

Vorzugsweise weist das Versorgungssystem eine Turbine auf, die dazu ausgebildet ist, Energie der Brennstoffzellenabluft zurückzugewinnen und der Leistungsübertragungseinrichtung zuzuführen. Besonders bevorzugt ist die Turbine auf einer Welle der Leistungsübertragungseinrichtung vorgesehen oder mit dieser über ein Getriebe verbunden.

Vorzugsweise ist die Leistungsübertragungseinrichtung schaltbar ausgebildet, so dass mindestens einer der mindestens zwei Verdichter von der Leistungsübertragungseinrichtung getrennt werden kann. Ferner kann auch vorgesehen sein, die Turbine und/oder die Antriebseinheit mittels der schaltbaren Leistungsübertragungseinrichtung von dem Versorgungssystem zu trennen. Die Trennung kann mechanisch, insbesondere durch eine Kupplung, erfolgen. Durch die mechanische Trennung können verschiedene Betriebszustände des Versorgungssystems eingestellt werden. Insbesondere kann mindestens ein Verdichter oder ein anderes Element, wie die Turbine oder die Antriebseinheit von der Leistungsübertragungseinrichtung getrennt werden. Alternativ oder zusätzlich kann eingestellt werden, dass einer der mindestens zwei Verdichter die Brennstoffzelle mit Druckluft versorgt, während Energie aus der Brennstoffzellenabluft über eine Turbine zurückgewonnen wird und ein anderer der mindestens zwei Verdichter ausschließlich durch diese zurückgewonnene Energie angetrieben wird.

Vorzugsweise bilden die mindestens zwei Verdichter eine mehrstufige Verdichtung. Vorzugsweise kann nach mindestens einer Verdichterstufe, insbesondere nach der ersten Verdichterstufe, Druckluft, insbesondere für die Brennstoffzelle, entnommen werden. Die Entnahme der Druckluft ist vorzugsweise durch eine Verzweigungsstelle realisiert, die eine feste Verzweigung und/oder ein steuerbares Ventil zur Steuerung der Luftmengen aufweisen kann.

Vorzugsweise umfasst das Pneumatiksystem einen weiteren Verbraucher, wie ein Bremssystem, ein Luftfedersystem, ein System zur Reifenbefüllung, einen Verdichter und/oder einen Druckluftbehälter. Die Druckluft, die dem Pneumatiksystem zugeführt wird, kann in dem Pneumatiksystem weiter verdichtet werden. So kann, ausgehend von einem ersten Druckniveau, entsprechend des Bedarfs des Pneumatiksystems eine weitere Verdichtung der Druckluft des ersten Druckniveaus auf ein zweites Druckniveau erfolgen. Das Bremssystem kann ein pneumatisches Bremssystem sein, das vorzugsweise eine Luftaufbereitung und/oder eine Kreisabsicherung und/oder einen Druckluftbehälter aufweist. Alternativ oder zusätzlich weist das Pneumatiksystem weitere Systeme auf, die typischerweise in einem pneumatischen Bremssystem Anwendung finden. Alternativ oder zusätzlich kann das Pneumatiksystem eine Anhängerschnittstelle umfassen.

Vorzugsweise ist das Fahrzeug des Versorgungssystems als PKW, LKW, Sattelzugmaschine, Nutzfahrzeug, Anhänger, als Verbund von Zugmaschine und Anhänger oder als Schienenfahrzeug ausgebildet.

Gemäß einem weiteren Aspekt der Erfindung ist ein Fahrzeug vorgesehen, das insbesondere als PKW, LKW, Sattelzugmaschine, Nutzfahrzeug, Anhänger, als Verbund von Zugmaschine und Anhänger oder als Schienenfahrzeug ausgebildet ist. Das Fahrzeug weist eine Brennstoffzelle und ein Pneumatiksystem auf. Ferner weist das Fahrzeug ein Versorgungssystem wie oben beschrieben auf, dessen Schnittstelle vorzugsweise mit einer Antriebseinheit des Fahrzeugs, insbesondere einer E-Maschine und/oder eine Antriebsmaschine, zur Leistungsübertragung verbunden ist.

Vorzugsweise weist das Fahrzeug auch entsprechende Merkmale auf, die oben bei der Beschreibung des erfindungsgemäßen Verfahrens erwähnt wurden.

Nachfolgend erfolgt die Beschreibung bevorzugter Ausführungsformen der Erfindung anhand der beigefügten Zeichnungen.

Im Einzelnen zeigen
- Fig. 1: eine erste Ausführungsform der Erfindung,
- Fig. 2: eine zweite Ausführungsform der Erfindung, und
- Fig. 3: eine dritte Ausführungsform der Erfindung.

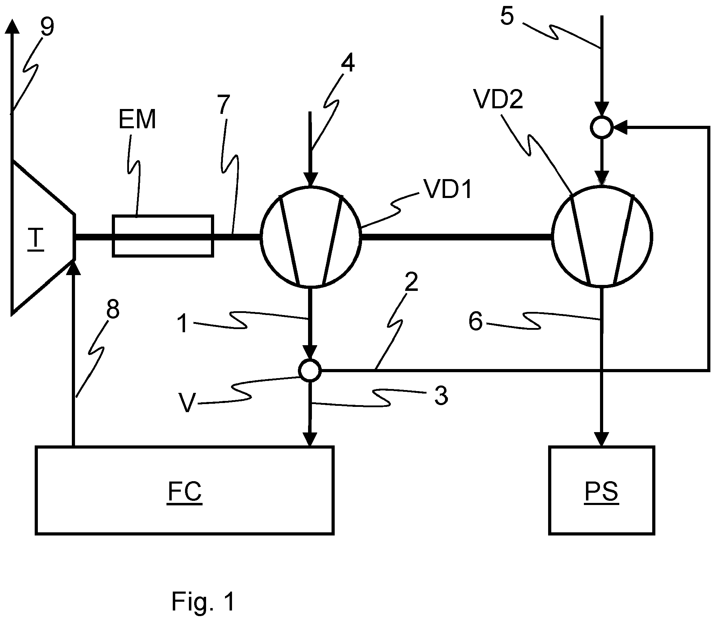

**Fig. 1** zeigt eine erste Ausführungsform der Erfindung.

Es ist ein pneumatisches Versorgungssystem gezeigt, das einen ersten Verdichter VD1 und einen zweiten Verdichter VD2 aufweist. Beide Verdichter VD1, VD2 sind auf einer gemeinsamen Welle 7 vorgesehen, über die sie betrieben werden können.

Die Welle 7 fungiert als Schnittstelle und Leistungsübertragungseinrichtung, um Leistung an die Verdichter VD1, VD2 zu übertragen.

Auf der Welle 7 ist zudem eine E-Maschine EM vorgesehen, die als Antriebseinheit fungiert und die die Leistung den Verdichtern VD1, VD2 über die Welle 7 zur Verfügung stellt.

Im Bild unten links ist eine Brennstoffzelle FC dargestellt. Rechts daneben ist ein Pneumatiksystem PS gezeigt. Das Pneumatiksystem PS kann beispielsweise ein Bremssystem, ein Luftfedersystem, einen Verdichter und/oder einen Druckluftbehälter aufweisen.

Links auf der Welle 7 ist schließlich eine Turbine T vorgesehen, die Leistung an die Verdichter VD1, VD2 über die Welle 7 zur Verfügung stellen kann.

Die Funktionsweise des gezeigten Versorgungssystems stellt sich wie folgt dar.

Die E-Maschine EM treibt über die Welle 7 die Verdichter VD1, VD2 an. Der erste Verdichter VD1 verdichtet Ansaugluft 4, die Umgebungsluft sein kann oder bereits vorverdichtet ist, zu Druckluft 1 eines ersten Druckniveaus.

Diese Druckluft 1 wird an eine Verzweigungsstelle geführt, die hier ein Ventil V aufweist, über das geregelt werden kann welcher Anteil der Druckluft 1 als abgezweigte Druckluft 2 dem zweiten Verdichter VD2 zugeführt wird und welcher Anteil der Druckluft 1 als Druckluft 3 der Brennstoffzelle FC zugeführt wird. Das Ventil V kann so geschaltet werden, dass die Druckluft 1 vollständig als abgezweigte Druckluft 2 dem zweiten Verdichter VD2 zugeführt wird oder dass die Druckluft 1 vollständig als Druckluft 3 der Brennstoffzelle FC zugeführt wird. Auch Zwischenstellungen des Ventils V sind möglich, so dass die Druckluft 1 anteilig an die Brennstoffzelle FC und an den zweiten Verdichter VD2 geleitet werden kann.

Der zweite Verdichter VD2 verdichtet die abgezweigte Druckluft 2 und führt diese als Druckluft 6 eines zweiten Druckniveaus, das höher liegt als das erste Druckniveau, dem Pneumatiksystem PS zu. Ferner kann der zweite Verdichter VD2 auch Ansaugluft 5 einer weiteren Quelle ansaugen.

Der in der der Brennstoffzelle FC zugeführten Druckluft 3 enthaltene Sauerstoff reagiert mit dem der Brennstoffzelle FC zugeführten Wasserstoff (nicht gezeigt) zu Wasser, wobei die Brennstoffzelle FC elektrischen Strom für das Fahrzeug erzeugt. Die Brennstoffzellenabluft 8, die das Reaktionsprodukt Wasser enthält, wird über die Turbine T geführt, wobei Energie, die in der Brennstoffzellenabluft 8 enthalten ist, durch die Turbine T zurückgewonnen wird und über die Welle 7 wieder als mechanische Leistung an die Verdichter VD1, VD2 übertragen wird. Die Turbinenabluft 9 wird dann an die Atmosphäre entlassen.

Die Verdichter VD1, VD2 bilden hier eine mehrstufige Verdichtung mit zwei Stufen aus, wobei Druckluft 1 des ersten Druckniveaus der Brennstoffzelle FC als Druckluft 3 zugeführt werden kann.

Anstelle des Ventils V kann hier auch eine feste Verzweigung vorgesehen sein.

Der Verdichter VD2 kann auch so ausgebildet sein, dass er ausschließlich die abgezweigte Druckluft 2 ansaugt.

Das gezeigte Versorgungssystem hat den Vorteil, dass der erste Verdichter VD1 Druckluft 1 eines ersten Druckniveaus liefern kann, so dass stets eine Grundversorgung an Druckluft 1 vorhanden ist, die in dieser Form stets der Brennstoffzelle FC zugeführt werden kann. Die Druckluft 1 kann beispielsweise auch in einem Druckluftbehälter zwischengespeichert werden. Darüber hinaus kann die abgezweigte Druckluft 2 durch den zweiten Verdichter VD2 ausgehend von dem ersten Druckniveau weiter verdichtet werden, so dass dieser einerseits speziell auf die Anforderungen des Pneumatiksystems PS ausgelegt werden kann und andererseits von einem höheren Druckniveau, nämlich von dem ersten Druckniveau 1 aus, die Verdichtung starten kann.

Ein weiterer Vorteil des gezeigten Versorgungssystems ist, dass zum Antrieb der Verdichter VD1, VD2 eine Antriebseinrichtung mit einer E-Maschine EM ausreichend ist und nicht pro Verdichter VD1, VD2 eine separate E-Maschine vorzusehen ist.

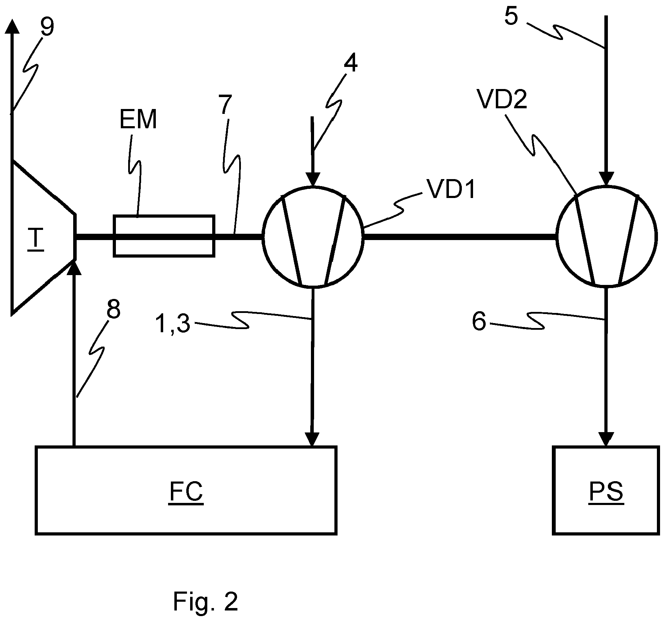

Fig. 2 zeigt eine zweite Ausführungsform der Erfindung.

Diese entspricht im Wesentlichen der Ausführungsform von Fig. 1, mit dem Unterschied, dass hier keine Druckluft von der Druckluft 1 des ersten Verdichters VD1 an den zweiten Verdichter VD2 abgezweigt wird.

Der zweite Verdichter VD2 saugt somit ausschließlich Ansaugluft 5 an, die Umgebungsluft sein kann oder bereits vorverdichtet ist.

Diese Konfiguration hat den Vorteil, dass beide Verdichter VD1, VD2 auf ihren jeweiligen Zweck hin ausgelegt und optimiert werden können. So führt der erste Verdichter VD1 Druckluft 1, 3 ausschließlich der Brennstoffzelle FC zu, während der zweite Verdichter VD2 Druckluft 6 ausschließlich dem Pneumatiksystem PS zuführt.

Eine Rückgewinnung von Energie aus der Brennstoffzellenabluft 8 durch die Turbine T erfolgt hier wie in Fig. 1 beschrieben. Die zurückgewonnene Energie wird dabei als Leistung über die Welle 7, die als Schnittstelle und Leistungsübertragungseinrichtung fungiert, beiden Verdichtern VD1, VD2 zugeführt.

Auch hier ist der Vorteil gegeben, dass zum Antrieb der Verdichter VD1, VD2 eine Antriebseinrichtung mit einer E-Maschine EM ausreichend ist und nicht pro Verdichter VD1, VD2 eine separate E-Maschine vorzusehen ist.

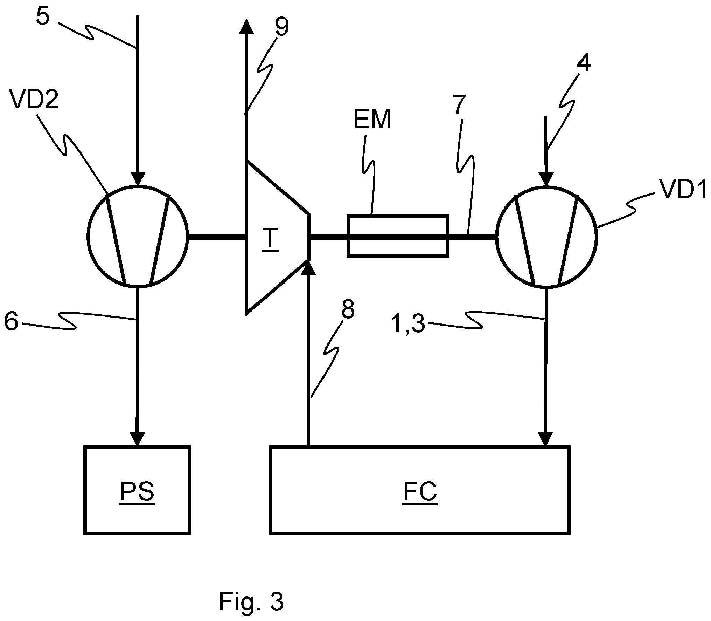

Fig. 3 zeigt eine dritte Ausführungsform der Erfindung.

Diese entspricht der Ausführungsform von Fig. 2, wobei der zweite Verdichter VD2 nun auf der Welle 7 links der Turbine T angeordnet ist. Ansonsten ist die Funktionsweise identisch zu der Ausführungsform von Fig. 2.

Auch hier ist der Vorteil gegeben, dass zum Antrieb der Verdichter VD1, VD2 eine Antriebseinrichtung mit einer E-Maschine EM ausreichend ist und nicht pro Verdichter VD1, VD2 eine separate E-Maschine vorzusehen ist.

Alle Ausführungsformen können eine schaltbare Leistungsübertragungseinrichtung aufweisen. Dazu können beispielsweise Kupplungen auf der jeweiligen Welle 7 vorgesehen sein, um eines oder mehrere der Elemente EM, T, VD1, VD2 auf der Welle 7 von dieser zu trennen.

So kann in den Figuren 1 und 2 beispielsweise eine Kupplung zwischen den Verdichtern VD1, VD2 vorgesehen sein. Ist diese geöffnet, so wird der zweite Verdichter VD2 nicht durch die E-Maschine EM angetrieben und es findet keine Verdichtung durch den zweiten Verdichter VD2 statt. Auch ist denkbar, alternativ oder zusätzlich eine Kupplung zwischen der E-Maschine EM und der Turbine zu platzieren, um die Turbine von der welle 7 zu trennen.

In Fig. 3 kann eine Kupplung zwischen der E-Maschine EM und dem ersten Verdichter VD1 vorgesehen werden, um dann nur den zweiten Verdichter VD2 anzutreiben. Alternativ oder zusätzlich kann eine Kupplung vorgesehen sein, um den zweiten Verdichter VD2 von der Welle 7 zu trennen, um dann nur den ersten Verdichter VD1 durch die E-Maschine EM zu betreiben. Alternativ oder zusätzlich kann eine Kupplung zwischen der E-Maschine EM und der Turbine T vorgesehen sein. So kann die Verbindung zwischen der E-Maschine EM und der Turbine T getrennt werden, wobei die E-Maschine EM dann über die Welle 7 den ersten Verdichter VD1 antreibt, wobei der zweite Verdichter VD2 dann ausschließlich über die durch die Turbine T zurückgewonnene Energie aus der Brennstoffzellenabluft 8 angetrieben wird.

Ferner ist denkbar, die E-Maschine EM in den Ausführungsformen von Fig. 1 und Fig. 2 zwischen den beiden Verdichtern VD1, VD2 zu platzieren. Ferner kann dann eine Kupplung zwischen der E-Maschine EM und dem ersten Verdichter und/oder dem zweiten Verdichter VD2 vorgesehen sein, um die Verdichter VD1, VD2 selektiv mit der E-Maschine EM über die Welle 7 zu verbinden.

### BEZUGSZEICHENLISTE

- 1: Druckluft (erstes Druckniveau)
- 2: Druckluft (abgezweigt)
- 3: Druckluft (zugeführt an Brennstoffzelle FC)
- 4: Ansaugluft (erster Verdichter VD1)
- 5: Ansaugluft (zweiter Verdichter VD2)
- 6: Druckluft
- 7: Welle
- 8: Brennstoffzellenabluft
- 9: Turbinenabluft
- EM: E-Maschine
- FC: Brennstoffzelle
- PS: Pneumatiksystem
- T: Turbine
- V: Ventil
- VD1: erster Verdichter
- VD2: zweiter Verdichter

## Patentansprüche

1. Versorgungssystem für ein Fahrzeug mit einem Pneumatiksystem (PS) und einer Brennstoffzelle (FC), aufweisend:
- eine Schnittstelle, die dazu ausgebildet ist, mit einer Antriebseinheit verbunden zu werden;
- eine Leistungsübertragungseinrichtung; und
- mindestens zwei Verdichter (VD1, VD2), wobei
das Versorgungssystem dazu ausgebildet ist, über die Leistungsübertragungseinrichtung Leistung von der Schnittstelle an die mindestens zwei Verdichter (VD1, VD2) zu übertragen, wobei das Versorgungssystem dazu ausgebildet ist, Druckluft an die Brennstoffzelle (FC) und das Pneumatiksystem (PS) zu übertragen.

2. Versorgungssystem nach Anspruch 1, wobei
einer der mindestens zwei Verdichter (VD2) dazu ausgebildet ist, Druckluft (6), insbesondere ausschließlich, für das Pneumatiksystem (PS) des Fahrzeugs zur Verfügung zu stellen.

3. Versorgungssystem nach Anspruch 1 oder 2, wobei
die Leistungsübertragungseinrichtung eine Welle (7), auf der mindestens einer der mindestens zwei Verdichter (VD1, VD2) und/oder die Antriebseinheit angeordnet sind, umfasst, und/oder wobei
die Leistungsübertragungseinrichtung ein Getriebe umfasst

4. Versorgungssystem nach einem der vorstehenden Ansprüche, wobei
eine Antriebseinheit, insbesondere eine E-Maschine (EM) und/oder eine Antriebsmaschine des Fahrzeugs, mit der Schnittstelle verbunden ist.

5. Versorgungssystem nach einem der vorstehenden Ansprüche, wobei
einer der mindestens zwei Verdichter (VD1) dazu ausgebildet ist, Druckluft (1), insbesondere ausschließlich, für die Brennstoffzelle (FC) des Fahrzeugs zur Verfügung zu stellen.

6. Versorgungssystem nach einem der vorstehenden Ansprüche, wobei
eine Turbine (T) vorgesehen ist, die dazu ausgebildet ist, Energie der Brennstoffzellenabluft (8) zurückzugewinnen und der Leistungsübertragungseinrichtung zuzuführen.

7. Versorgungssystem nach einem der vorstehenden Ansprüche, wobei
die Leistungsübertragungseinrichtung schaltbar ausgebildet ist, so dass mindestens einer der mindestens zwei Verdichter (VD1, VD2) von der Leistungsübertragungseinrichtung getrennt werden kann.

8. Versorgungssystem nach einem der vorstehenden Ansprüche, wobei
die mindestens zwei Verdichter (VD1, VD2) eine mehrstufige Verdichtung bilden, wobei vorzugsweise nach jeder Verdichterstufe, insbesondere nach der ersten Verdichterstufe, Druckluft (3), insbesondere für die Brennstoffzelle (FC), entnommen werden kann.

9. Versorgungssystem nach einem der vorstehenden Ansprüche, wobei
das Pneumatiksystem (PS) einen weiteren Verbraucher, wie ein pneumatisches Bremssystem, ein Luftfedersystem, , einen Verdichter und/oder einen Druckluftbehälter umfasst.

10. Versorgungssystem nach einem der vorstehenden Ansprüche, wobei
das Fahrzeug als PKW, LKW, Sattelzugmaschine, Nutzfahrzeug, Anhänger, als Verbund von Zugmaschine und Anhänger oder als Schienenfahrzeug ausgebildet ist.

11. Fahrzeug, das insbesondere als PKW, LKW, Sattelzugmaschine, Nutzfahrzeug, Anhänger oder als Schienenfahrzeug ausgebildet ist, wobei
das Fahrzeug eine Brennstoffzelle (FC) und ein Pneumatiksystem (PS) aufweist, und wobei
das Fahrzeug ein Versorgungssystem nach einem der Ansprüche 1 bis 10 aufweist, dessen Schnittstelle vorzugsweise mit einer Antriebseinheit des Fahrzeugs, insbesondere einer E-Maschine (EM) und/oder eine Antriebsmaschine, zur Leistungsübertragung verbunden ist.
